(19)

Europäisches
Patentamt
European
Patent Office
Office européen
des brevets

(11)  **EP 2 680 357 A1**

(12)  **EUROPEAN PATENT APPLICATION**

(43)  Date of publication:
      **01.01.2014  Bulletin 2014/01**

(51)  Int Cl.:
      **H01M 8/12** *(2006.01)*

(21)  Application number: **12400023.3**

(22)  Date of filing: **27.06.2012**

(84)  Designated Contracting States:
      **AL AT BE BG CH CY CZ DE DK EE ES FI FR GB
      GR HR HU IE IS IT LI LT LU LV MC MK MT NL NO
      PL PT RO RS SE SI SK SM TR**
      Designated Extension States:
      **BA ME**

(71)  Applicant: **Forschungszentrum Jülich GmbH
      52425 Jülich (DE)**

(72)  Inventors:
      • **Hirschfeld, Julian Arndt
        40670 Meerbusch (DE)**
      • **Lustfeld, Hans
        52428 Jüllich (DE)**

(54)  **Layered electrolyte with high ionic conductivity**

(57)    The electrolyte material comprises an electronically insulating oxide of a base metal and at least one additional metal or oxide of an additional metal, which enhances the base metal with ionic conductivity. According to the invention, the electrolyte material has a layer structure with B-layers in which at least 30 % of the metal atoms and/or metal ions are of the base metal and A-layers in which at least 30 % of the metal atoms and/or metal ions are of the additional metal. This segregation of metals also segregates oxygen vacancies from passageway blockages. In an electrolyte material with 2 zirconium ions, 2 yttrium ions and 7 oxygen ions per unit cell and a vacancy concentration of 12.5 %, ionic conductivity parallel to the B-layers is 42 S/m at 800°C and 13 S/m at 500°C. The prior-art electrolyte material 8YSZ with a vacancy concentration of 4 % has only 2 S/m at 800°C and 0.11 S/m at 500°C.

EP 2 680 357 A1

**Description**

The invention relates to a layered electrolyte with high ionic conductivity suitable for solid oxide fuel cells (SOFCs).

Background of the invention

For a solid oxide fuel cell (SOFC) to drive negative electrons and thus an electronic current through an external appliance, negative oxygen ions travel through the electronically insulating electrolyte from the cathode (oxygen) to the anode (fuel) side. Ionic conductivity of the electrolyte is thus the bottleneck for the performance of the cell. Unfortunately, ionic conductivity of known solid electrolytes only reaches suitable levels at temperatures of about 800-1000°C. These temperatures are a challenge for the construction of SOFCs, as they put a strain on the used materials. Slightly different thermal expansion of different layers in the SOFC exerts high mechanical forces on the cell, especially when the cell is warmed up or shut down. Operation under high temperature is also a limiting factor for the lifetime of the SOFC. Therefore, there is an urgent need to decrease the required operating temperatures for SOFC.

Objective of the invention

To this end, an electrolyte material with better ionic conductivity at lower temperatures is required. It is therefore the objective of the invention to provide such an electrolyte material. The present invention accomplishes this objective through an electrolyte material according to the main claim and through two fabrication methods that provide an electrolyte for a fuel cell comprising said electrolyte material according to the other independent claims. Further embodiments are the subject of dependent claims.

Description of the invention

The inventors have developed a novel electrolyte material. This material comprises an electronically insulating oxide of a base metal and at least one additional metal or oxide of an additional metal, where the additional metal or oxide of the additional metal enhances the base metal with ionic conductivity.

According to the invention, the electrolyte material has a layer structure with

● B-layers in which at least 30 %, preferably at least 70 % and most preferably at least 90 % of the metal atoms and/or metal ions are atoms and/or ions of the base metal and

● A-layers in which at least 30 %, preferably at least 70 % and most preferably at least 90 % of the metal atoms and/or metal ions are atoms and/or ions of the additional metal.

In an electrolyte material where an additional metal or oxide of an additional metal enhances an insulating oxide of a base metal with ionic conductivity, the additional metal/oxide provides this ionic conductivity by the introduction of oxygen vacancies. To pass through the electrolyte material, an oxygen ion has to hop from one such vacancy to another. The ionic conductivity increases linearly with the number of such vacancies. However, the addition of the additional metal/oxide also induces blockages along the pathways for oxygen ions; one such blockage suffices to make an entire pathway through the electrolyte material unusable. The detriment of this effect towards ionic conductivity increases exponentially with the number of blockages and therefore with the concentration of the additional metal/oxide. So there is an optimum in the concentration of the additional metal/oxide. Usually no more than 16 % of the total metal in the electrolyte material is additional metal. This is the limiting factor for total ionic conductivity in the material, and thus for the lowest temperature needed to obtain a given ionic conductivity. This is why "high-temperature fuel cell" has become a synonym for "solid-oxide fuel cell".

The inventors have conceived that if base metal and additional metal atoms/ions are segregated into separate layers, the desired oxygen vacancies will form inside the layers containing the base metal, while the blockages will form in the layers containing the additional metal. That way, almost all ionic transport takes place in the base metal B-layers rich in vacancies and will not be hindered by the blockages concentrated in the additional metal A-layers. Additionally, the formation of vacancy pairs, which are common in prior-art YSZ electrolytes and decrease the ionic conductivity further, is suppressed. The result is a very high ionic conductivity in the plane of the B-layers and almost no ionic conductivity in the perpendicular direction from one B-layer through one or more A-layers to another B-layer. Basically, ionic conductivity in one of the three spatial directions has been traded in for a much higher conductivity in the plane perpendicular to this sacrificed direction. There is almost no ionic conductivity inside the additional metal A-layers, but since the ionic conductivity inside the B-layers is much more than doubled, there is still a dramatic increase in the ionic conductivity. In an electrolyte material with 2 zirconium ions, 2 yttrium ions and 7 oxygen ions per unit cell and a vacancy concentration of 12.5 %, ionic conductivity parallel to the B-layers is 42 S/m at 800°C and 13 S/m at 500°C. The prior-art electrolyte material 8YSZ with a vacancy concentration of 4 % has only 2 S/m at 800°C and 0.11 S/m at 500°C. Even the high-performance prior-art electrolyte LSGM has only 18 S/m at 800 °C and 1 S/m at 500°C. The inventors have realized that for many applications, e.g. electrolytes for fuel cells, maximizing ionic conductivity in one direction is much more important than having a high isotropic ionic conductivity.

It should be noted that the segregation of the different metal atoms/ions into different layers does not necessarily imply that the overall stoichiometry of the electrolyte material needs to be altered. There is already an advantageous effect if the atoms/ions used in a known electrolyte material are segregated, i.e. just re-arranged, into the claimed configuration, since this already eliminates blockages. However, this elimination in turn permits to increase the additional metal content in the stoichiometry, which increases the concentration of carriers (vacancies).

The onset of the advantageous effect is not "on-off", but rather gradual with the degree to which the A-layers and B-layers are "pure", i.e., with the percentage of all metal atoms/ions in the A-layers and B-layers being additional metal or base metal atoms/ions, respectively. The effect begins to show to a technologically relevant extent if this percentage is 30 % or more. Preferably, it is 70 % or more; most preferably, it is 90 % or more.

In an advantageous embodiment of the invention, the base metal is chosen from the group of Zr, Al, Ce, Mg and Bi. In a further advantageous embodiment of the invention, the additional metal is chosen from the group of Y, Sc, Gd, La, Sr and V. These are the metals most commonly used in solid electrolytes for fuel cells, where high ionic conductivity at the lowest possible temperature is paramount.

In a specially advantageous embodiment of the invention, the base metal is zirconium and the additional metal is yttrium. These metals are most commonly used in electrolytes for SOFC at present, so the technology to integrate an electrolyte containing these metals into the complex SOFC is readily available.

In a specially advantageous embodiment of the invention, the electrolyte material comprises an alternating structure (ABABAB...) of A- and B-layers. In this kind of structure, there are oxygen sites (which may be occupied or vacant) that have one ore more additional metal atom/ion as its nearest neighbour. Because vacancies have a tendency to avoid places with the additional metal as a nearest neighbour, they will all form inside the B-layer; however, as all places inside the B-layer have an additional metal atom/ion as one of its nearest neighbour (provided the B-layer is a monolayer), the vacancies will have no choice but to have one additional metal atom/ion as nearest neighbour. An oxygen ion hopping from one oxygen site to the next one has to pass a potential barrier. The presence of an additional metal atom/ion as nearest neighbour of an oxygen site raises the energy level of this site, so the height of the barrier is reduced. Preferably only one additional metal atom/ion is present as nearest neighbour; otherwise there is a tendency of oxygen ions to hop towards oxygen sites with fewer (e.g., only one) additional metal atom/ions in the vicinity. Since both the initial and final oxygen site for a hop of an oxygen ion are inside the B-layer, the oxygen ion will encounter only base metal atoms/ions ("gate ions") on its path during the hop. If it encountered any additional metal atoms/ions, this would be a significant obstacle against the hop.

In another specially advantageous embodiment of the invention, the electrolyte material has a fluorite crystal structure. This structure permits an alternating layering (ABABAB...) of A- and B-monolayers. To make an alternating layering of A- and B-layers compliant with other crystal structures, A- and B-layers thicker than one monolayer may be required.

Preferably, each of the A-layers and B-layers is no thicker than 10 nm, preferably no thicker than 5 nm and most preferably comprises 1 or 2 monolayers of atoms and/or ions.

Preferably, the atoms and/or ions of the additional metal are larger than the atoms and/or ions of the base metal. A higher number of additional metal atoms/ions will then exert an expansive strain on the lattice. This decreases the height of the potential barrier for each hop of an oxygen ion from one oxygen site to the next.

The availability of high-conductivity electrolytes according to the invention unlocks significant fetters previously governing the construction of SOFC. Because of the low ionic conductivity of available electrolytes, the electrolyte had to be made as thin as possible; other components, such as the electrodes, had to provide for the mechanical stability of the cell. While the claimed electrolyte should advantageously be no thicker than 50 $\mu$m, preferably no thicker than 10 $\mu$m and most preferably no thicker than 5 $\mu$m to comply with the present SOFC designs, its increased ionic conductivity permits to turn the present design inside out and make the electrolyte the thickest, stability-giving element of the SOFC.

The required segregated layers can no longer be produced with the sol-gel and sintering process previously used for the fabrication of SOFC electrolytes. However, methods for the controlled fabrication of the required segregated layers are readily available. Molecular-beam epitaxy (MBE) is most precise but also most demanding and slowest. Chemical-vapour deposition (CVD) is less demanding and provides for a higher throughput. Since the advantageous effect is not an "on-off" effect, but sets on gradually, it is also possible to trade in a little part of the dramatic gain in ionic conductivity for much easier, inexpensive and high-throughput fabrication by sputtering.

Even fabrication by sputtering is slower than the previous bulk sol-gel and sintering fabrication, though. To speed up fabrication of higher thickness electrolytes for SOFC and at the same time orient the B-planes into the direction of the ionic current between cathode and anode, the inventors have developed a method to produce an electrolyte for a fuel cell comprising the claimed electrolyte material. The method starts with growing the layer structure of the electrolyte material as a film on a substrate. At least one section is cut from this film. The cut face of the section is then contacted with a face through which the ionic current between the cathode and the anode of the fuel cell is to flow, so that said ionic current flows along the B-planes of the electrolyte material. This face may be a face of the cathode or the anode, but it may also be a face of a suitable carrier later placed between cathode and anode. Multiple such sections may be arranged across the surface of the cathode and/or anode to cover this surface. Multiple such sections may also be stacked on top of each other to produce a thicker electrolyte.

As an alternative, the inventors have also developed a less challenging method by which the B-planes can be oriented into the direction of the ionic current in the fuel cell. A suitable substrate is arranged in an angle of between 70 and 110, preferably between 80 and 100 and most preferably in a right angle, with a face through which the ionic current between the cathode and the anode of the fuel cell is to flow. This face may be a face of the cathode or the anode, but it may also be a face of a suitable carrier later placed between cathode and anode. The layer structure of the electrolyte material is then grown as a film on the substrate. The substrate is not required for the electrical function of the film; it may optionally be removed.

Detailed description of preferred embodiment

In the following, the invention is explained in more detail by means of figures and calculations on the favoured embodiment with 2 zirconium ions, 2 yttrium ions and 7 oxygen ions per unit cell without limiting the scope of the invention. Dark small spheres denote oxygen, large dark spheres denote yttrium and bright large spheres denote zirconium.

List of Figures

| | |
|---|---|
| Figure 8.1: | Layered structure of the $Zr_2Y_2O_7$ compound. For better visibility all oxygen atoms of the perfect fluorite structure are shown. |
| Figure 8.2: | The 3/1 (left) and the 2/2 (right) structure. |
| Figure 8.3: | Representation of a single zirconium layer in the $2 \times 2 \times 2$ cell with vacancy position indices. As in any VASP computation periodic boundary conditions apply here. This means that the four depicted corner ions are in fact one and the same ion. Thus e.g. position 1 and 4 are direct neighbors. |
| Figure 8.4: | MEP of a jump in the layered structure. The ending point has the larger vacancy-vacancy distance. |
| Figure 8.5: | Local vacancy-vacancy correlation in one layer. When a vacancy is located at the white spot, there can be no other vacancy on the surrounding oxygen sites. The simple crosses indicate unstable position for a second vacancy due to the V-V repulsion and the circled cross indicates $Zr_1$ / $Y_3$ lattice sites being generally unstable for vacancies. |
| Figure 8.6: | Typical distribution of vacancies in the layered structure (not optimized vacancy position). The numbers correspond to the vacancy positions in the in Fig. 8.7 depicted MEP. |
| Figure 8.7: | Minimum Energy Pathway for a vacancy in the layered structure with all 16 vacancies in the relaxed non-cubic cell. From the first to the last vacancy position this pathway spans five oxygen sites in which the fist jump, from 1 to 2, is a jump over two sites. |
| Figure 8.8: | Arrhenius plot of the MD data. The grey dots are the data-points from the MD calculation, the line is the linear fit of all of these data-points in this plot. The crosses indicate the error-bars of each MD run. |
| Figure 8.9: | Ionic conductivity in the layered structure: (a) as an Arrhenius plot, and (b) as the temperature dependent ionic conductivity. |
| Figure 8.10: | Two dimensional lattice used for the two dimensional simulation (rectangle) $(N_i = 6, N_j = 4)$. The lower bound denotes $i = 1$ and the upper one $i = N_i$. The lateral bounds are connected by periodic boundary conditions to each other. The zig-zag lines from $i = 1$ to $i = N_i$ denote each one pathway from left ($j = 1$) to ($j = N_j$). The dashed lines show the possible sidewards jumps. For a vacancy the two dimensional blocking area is shown (circle). All enclosed sites are blocked for other vacancies. |
| Figure 8.11: | Simulations in a lattice of the sizes $N_i = 10$ times $N_j = 10$, without particle repulsion ($R = 1$) and number of steps $5 \cdot 10^5$. The resulting current $j$ is plotted in dependence of the real mean concentration $c_{mean}$ throughout each simulation run. A concentration of 50% cannot be exceeded in these simulations. |
| Figure 8.12: | Dies ist noch nicht der $R = 2$ plot. Simulations in a lattice of the sizes $N_i = 10$ times $N_j = 10$, with particle repulsion ($R = 2$) and number of steps $5 \cdot 10^5$. The resulting current $j$ is plotted in dependence of the real mean concentration $c_{mean}$ throughout each simulation run. A concentration of 22% cannot be exceeded in these simulations. |

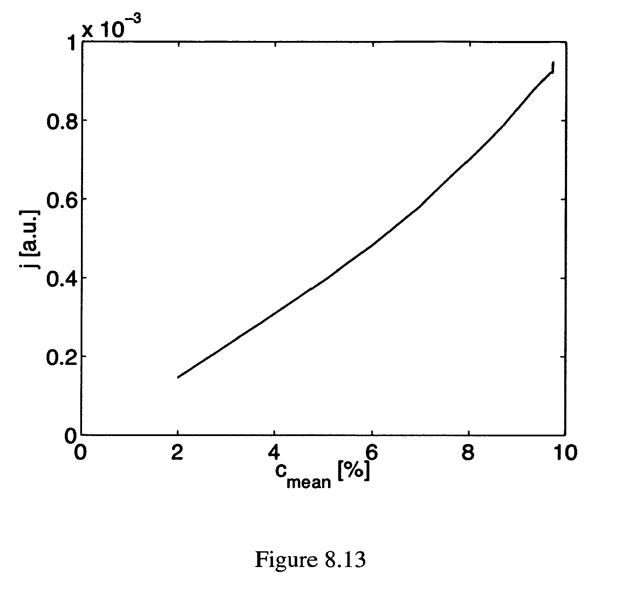

Figure 8.13: Simulations in a lattice of the sizes $N_i$ = 10 times $N_j$ = 10, with particle repulsion ($R$ = 3) and number of steps $5 \cdot 10^5$. The resulting current $j$ is plotted in dependence of the real mean concentration $c_{mean}$ throughout each simulation run. A concentration of 10% cannot be exceeded in these simulations.

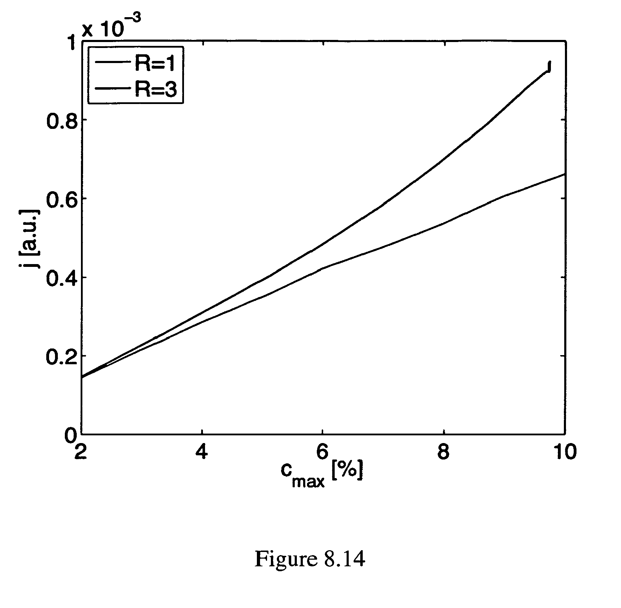

Figure 8.14: $R$ = 2 fehlt noch und der plot wird von 2% bis 20% gehen. Comparison of different repulsion ranges $R$ for concentrations between 2% and 20%.

## 8. Anisotropic YSZ

### 8.1. The layered structure

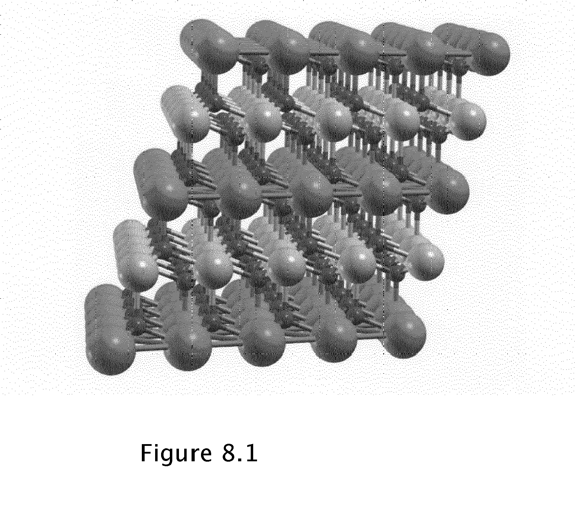

While conducting research on the electrolyte material YSZ the idea was born that requiring high conductivities in all spatial dimensions of the electrolyte is a too strong constraint. Since basically only the ionic movement through the electrolyte needs to be high, it seems reasonable to systematically search for structures, which have an anisotropic conductivity, being high in the mentioned direction but probably low in other directions. Based on the previous findings reported in this thesis, such a new structure is proposed, which has an enhanced conductivity into the direction of motion. This is achieved by trading in the conductivity in a direction perpendicular to it. Moving along the [001] direction in the fluorite structure, one passes layers of cations being perpendicular to this direction. In the proposed structure every second of these layers is a pure yttrium layer and every other a pure zirconium layer. The direction of oxygen ion motion is chosen perpendicular to this layering. The chemical formula of this structure is $Zr_2Y_2O_7$ exhibiting a vacancy concentration of 12.5 %. The structure is visualized in Fig. 8.1. To obtain the increased conductivity into the direction of motion, the following effects are harnessed:

1. Increase of the lattice constant to introduce expansive strain, which decreases the migration barrier for oxygen ions.

2. Increase of the charge carrier number in the system without having any yttrium induced blockages along the pathways.

3. Obtaining oxygen lattice sites, which have exactly one yttrium ion as nearest neighbor, but at the same time having only zirconium gate ions.

Due to the high content of large yttrium ions, the lattice is expanded in comparison to pure zirconia. This is the origin of point 1. The strain effects have been discussed extensively in chapter 7. The high yttrium content also leads to an increased number of vacancies in the system. But due to the special arrangement of the cations, no yttrium induced high barriers are hindering the migration of oxygen ions between the electrodes (point 2). As shown in Eq. 4.35 the conductivity increases with the number of vacancies in the system. However, high vacancy concentration give rise to vacancy clustering hindering the oxygen motion. It will be shown that no such clusters are formed in this construction. Pornpasertsuk et al.[51] already reported a decreased migration barrier, when the initial and final lattice site of an oxygen jump have one yttrium ion as nearest neighbor. This has also been discussed in the previous chapter, assigning this effect to the different charge of the neighboring yttrium ions. Furthermore, the 1NN oxygen sites around yttrium ions are less favorable for vacancies. This again reduces the relevant barrier in the migration pathway along the layering. Point 1 is obtained just by increasing the yttrium content, independently of the dopant distribution - although a structure as proposed here leads to an anisotropic strain, and homogeneously distributed yttrium ions would give rise to isotropic strain. In contrast to this are points two and three, which can only be achieved by the alternating layers in the [001] direction - or equivalent directions with the same symmetries as the [111] direction. Only in this structure a pathway without yttrium barriers and with an nearest neighbor yttrium ion to each oxygen lattice site is possible.

Since the vacancies prefer yttrium far positions, the lattice sites with three yttrium ions as 1NN are avoided by the vacancies. This leads to a motion along zig-zag paths in the zirconium layers, which is effectively limited to two dimensions. In the third geometric direction, the barriers are very high due to the yttrium layers, making a motion into this direction basically impossible.

To represent the $Zr_2Y_2O_7$ compound in a crystallographic cell, at least four fluorite unit cells are necessary. Basic investigations of the layered structure are done in a 2 $\times$ 2 $\times$ 2 supercell ($4Zr^{4+}$, $4Y^{3+}$, $14O^{2-}$, $2V^{2+}$), and extended calculations are done in a larger 4 $\times$ 4 $\times$ 4 supercell ($32Zr^{4+}$, $32Y^{3+}$, $112O^{2-}$, $16V^{2+}$).

**Anisotropic lattice** As pointed out, the layered configuration of the cation sub-lattice gives rise to an anisotropic strain in the system, which leads to a deviation from the cubic crystal vectors. Based on the direction of the layering, the unit vectors can be given in the following way:

$$a \cdot \begin{pmatrix} 0.5 & 0.5 & 0 \\ 0 & 0.5 & 0.5 \\ 0.5 \cdot c & 0 & 0.5 \cdot c \end{pmatrix} \qquad (8.1)$$

where $a$ is the cubic crystal constant and $c$ is a parameter denoting the deviation from the cubic lattice. The ground state is found by determining the cell volume with the lowest energy under variation of $c$. This minimization is done in two steps:

1. The cohesive energy of the system for four values of $a$ is determined for fixed $c$. These energies are feed into a Birch-Murnaghan Equation of state (Eq. 6.1), by which the ground state $E(V_0(c))$ for fixed $c$ is determined.
2. $c$ is varied and the respective ground states $E(V_0(c))$ are determined until the energy minimizing deviation $c_0$ is obtained. With $c_0$ also the ground state volume $V_0(c_0)$ is uniquely defined.

$$E(V_0(c_0)) = \min_c E(V_0(c)) \rightarrow V_0(c_0)$$

In the large cell the 16 vacancies are randomly distributed in the two zirconium-layers. In such a configuration the following ground state is found:

$$c = 0.997$$

$$a = 4 \cdot 5.298 \mathring{A}$$

$$V_0 = 2364.90 \mathring{A}^3$$

$$E_0 = -1642.3951 eV$$

$$B_0 = 159.69 GPa$$

$$\partial B_0 / \partial P = 7.73516$$

A cubic FCC cell with the same volume has a lattice constant of $a_{equiv}$ = 5.285Å (lattice constant of the corresponding fluorite unit cell), which is similar to the crystal constant determined in the cubic cell ($a_{equiv}$ = 5.287Å).

In the next section the stability of the cation lattice is taken into consideration using the small cell. In section 8.3 the correlation effects of vacancies are investigated, which are very important due to the high concentration of vacancies. Because the diversity of migration barriers occurring in this system is very high, it is impossible to determine the relevant barrier. Probably there is not one barrier alone that determines the activation energy, but many different barriers together. In such a complex system different means of evaluating the properties are necessary. Therefore, in section 8.4 ab-initio molecular dynamics calculations are presented, which yield the diffusivity and the activation energy of the oxygen ion migration. Subsequently, a diffusion model under consideration of vacancy-vacancy repulsion is presented showing an increase in the ionic current when the charge carriers are repelling each other.

Finally simple hopping simulations will complement the model and extend it to two dimensions.

Table 8.1: Energy and relaxed volumes of the layered and similar configurations in the $2 \times 2 \times 2$ cell without vacancies.

|  | Energy (eV) | Volume (Å$^3$) |
|---|---|---|
| 4/0 | -200.657 | 298.29 |

(continued)

|  | Energy (eV) | Volume (Å$^3$) |
|---|---|---|
| 3/1 | -200.264 | 298.51 |
| 2/2 | -199.869 | 296.84 |

### 8.2. Stability considerations

The proposed structure is highly ordered. Due to entropy contributions, it will not form spontaneously, as long as the structure is not significantly more stable than all other possible configurations. However, technologically more sophisticated methods like Molecular Beam Epitaxy (MBE) are available that can assemble this structure layer by layer. This procedure is necessary to synthesize this structure. Still, the structure has to be at least metastable, even if the layered structure can be set up in MBE. Since cation diffusion in YSZ is very small at the operating temperature of a SOFC, such a metastability can be assumed (e.g. []). Nevertheless, a closer look into this aspect is mandatory. Therefore, this configuration is compared to a series of other structures of the same compound. As long as other structures are not much lower in energy, and the structure is metastable, it will keep its configuration for a long time.

Table 8.2: Energy and relaxed volumes of different $Zr_2Y_2O_7$ structures, with favorable (f) positioned and randomly (r) positioned vacancies (one possibility).

|  | Energy (eV) | Volume (Å$^3$) |
|---|---|---|
| 4/0 f | -204.3542 | 269.16 |
| 3/1 r | -204.2092 | 297.8 |
| 3/1 f | -204.4888 | 298.28 |
| 2/2 r | -201.048 | 202.78 |
| 2/2 f | -203.4579 | 295.64 |

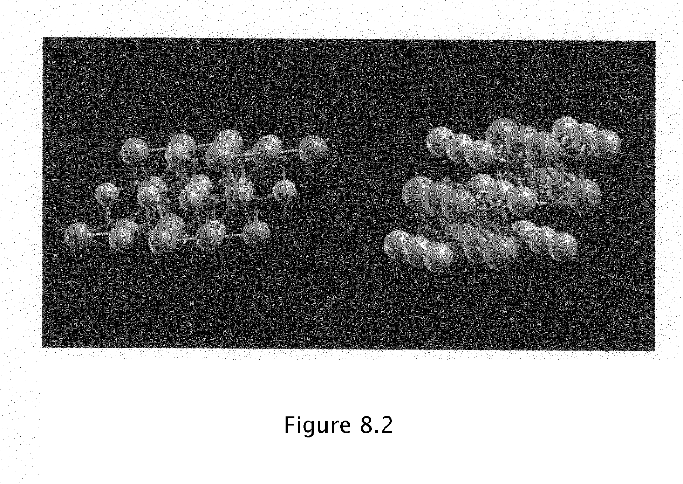

This consideration is done in the $2 \times 2 \times 2$ cell comparing different configurations of the 4 yttrium and 4 zirconium ions in this cell. In principle there are three different types of configurations of the zirconium-yttrium distribution. The layered one [four zirconium ions in one layer, zero in the other (4/0)] (cf. Fig. 8.1), one configuration with two interchanged ions (3/1) (cf. Fig. 8.2 left) and one with equal amount of Y and Zr in both layers (2/2) (cf. Fig. 8.2 right). Although there are different configurations in the (3/1) and the (2/2) distribution, only those are relevant, which have the lowest energy. In table 8.1 the energies of the system without vacancies (and adapted number of electrons) are shown. Although the 2/2 structure is also a perfectly layered structure in another crystallographic direction, it is less stable than the 4/0 structure. The 3/1 structure and the 4/0 structure differ very little in energy.

The calculations without vacancies show the pure effect of the cation ordering. Since the vacancy correlations have a strong impact on the configurational energy, the computations have to be complemented by calculations with vacancies. Previous publications reported that the second nearest neighbor position of vacancy to yttrium is the most favorable distance (e.g. [51]). Thus, the less yttrium ions are NN to vacancies, the more stable the structure is. This can also be seen from the computational results in Tab. 8.2. If the vacancies are set to lattice sites with as little yttrium neighbors as possible (favorable structures, referred to by the addition 'f'), the structure is more stable than in the case that they are randomly distributed (referred to by the addition 'r'). When the vacancies are positioned favorably, the 3/1f structure is more stable than the 4/0f structure. Based on the V-Y distance, this is quite clear: In the 4/0f structure, all favorable vacancy positions have three zirconium NN and one yttrium NN $(Zr_3/Y_1$ lattice sites), while in the 3/1f structure, there are two lattice sites with no yttrium NN at all $(Zr_4/Y_0)$. Thus, if the vacancies are positioned at these sites, the 3/1 configuration becomes more stable than the 4/0 structure. However, from the 16 oxygen lattice sites, 12 are $Zr_2 / Y_2$, two are $Zr_0 / Y_4$ and two are $Zr_4 / Y_0$ sites. Thus, only 2 lattice sites are favorable. The 2/2 structure is less stable, since there are only $Zr_2 / Y_2$ lattice sites in the system.

In the large $4 \times 4 \times 4$ super cell, there are about $1.8 \cdot 10^{18}$ combinations possible in the cation sub-lattice. Obviously many of them are equivalent to each other and can be transferred by symmetry operations. Nevertheless, the sheer number of configurations prevents a rigorous investigation. It would also not help the understanding any further. Once the structure is synthesized, an exchange of cations is very unlikely.

The work by Predith et al. [] further corroborates the assumption of stability for the here proposed structure. They investigated many different configurations for different compositions of the Y-Zr-O system in both the monoclinic and the cubic fluorite structure. They predicted that a composition of 33% Yttrium in zirconium oxide has the most negative formation energy. This energy of the most stable structure of a given composition increases only little up to an yttrium content of 60%. For the compound $Zr_4Y_2O_{11}$ they predicted a layered structure along the [111] direction, in which one layer is completely filled with zirconium and every other with a mixture of yttrium and zirconium. The zirconium ions in this plane are surrounded by yttrium hexagons. Their layering direction is equivalent to the here proposed structure.

### 8.3. Vacancy-Vacancy interactions

From now on it will be assumed that the layered structure as depicted in Fig. 8.1 has been build and is metastable. Following considerations only address the distribution and motion of oxygen ion vacancies.

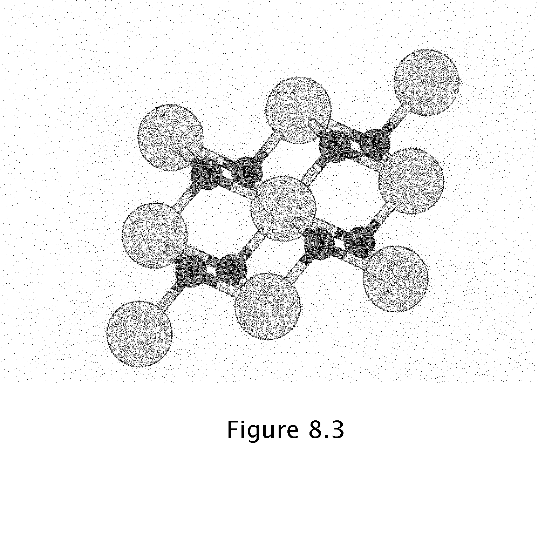

In the $2 \times 2 \times 2$ cell two vacancies are present. Only the oxygen positions with three zirconium NN and one yttrium NN ( $Zr_3$ / $Y_1$ ) are stable for the vacancies. If set to the $Zr_1$ / $Y_3$ positions, the vacancies will relax in most cases to a nearby $Zr_3$ / $Y_1$ site. Interactions with other vacancies might prevent that, but the energy is minimal if all vacancies are on $Zr_3$ / $Y_1$ lattice sites. This reduces the number of oxygen lattice sites taking part in the migration process by half. Consequently, there are only eight lattice sites available for vacancies in the $2 \times 2 \times 2$ cell. For one fixed vacancy, seven different sites are available for the second vacancy (cf. Fig. 8.3 and Tab. 8.3 for the energies). Here it turns out that most pairs are very close in energy. Only position 1 of the second vacancy lead to a higher energy. Due to the periodic boundary conditions, the two vacancies form a [111] vacancy pair.

In the $4 \times 4 \times 4$ layered cell with only two vacancies ($e^-$ number adapted) these correlations are checked again. It turns out that not only the [111] pair, but also the [100] and [110] pairs are unstable. This was not visible in the small cell, since the vacancies cannot have a greater distance than 2NN. Since only the $Zr_3$ / $Y_1$ lattice sites are accessible by the vacancies, they move away in plane. Starting from either a [100] or a [110] pair, the vacancy end up in [121] pairs. Such a pair is simply one oxygen site more distant than in the [110] pair. Starting from a [111] pair, one of the vacancies move one site further and they assume a [211] distance. The energy of the two stable pairs in the $4 \times 4 \times 4$ cell are $E_{[120]}$ = -1613.032$eV$ and $E_{[211]}$ =-1613.014$eV$. The energy of the system, when the two vacancies are located as far away from each other as possible in the given cell, is $E_{far}$ =-1613.446$eV$ . This indicates that the vacancies are repelling each other even over a longer distance.

While in this system the vacancies cannot keep nearby lattice sites, such behavior

Table 8.3: Energies of vacancy configurations in one zirconium layer (cf. Fig. 8.3). One of the two vacancies is located in the 'V' position, and the other one takes all seven possible positions. Note, that these are the total energies of the $2 \times 2 \times 2$ supercell.

| Position of $2_{nd}$ vacancy | Energy in eV |
| --- | --- |
| 1 | -20.278 |
| 2 | -20.428 |
| 3 | -20.437 |
| 4 | -20.428 |
| 5 | -20.437 |
| 6 | -20.430 |
| 7 | -20.277 |

was not observed in this way in 8YSZ. However, the tendency is already visible in Fig. 7.17, where the configuration with the smaller distance between vacancies was less stable than the one with large distance. It is also known that, especially at high vacancy concentrations, the vacancies will cluster and form stable pairs. Such pairs are not seen in any calculation of the layered structure.

To figure out, whether the missing of vacancy clustering is a numerical problem, or in fact physical, the vacancy pairs are calculated in pure zirconia ($3 \times 3 \times 3$ cell). In these simulations it turns out that the [111] pair is $\Delta E_{[100][111]}$ = 0.5$eV$ more stable than a [100] pair, but the [110] is $\Delta E_{[100][111]}$ = -0.43eV more stable. The resulting energies of the vacancy pairs are $E_{[100]}$ =-769.859$eV$ , $E_{[110]}$ =-770.789$eV$ , and $E_{[111]}$ = -770.358$eV$. With the ordering $E_{[100]} > E_{[111]} > E_{[110]}$, there is clearly a stable vacancy pairing along the [110] direction possible in pure zirconia. Although, in literature typically the [111] vacancy pair is denoted as the most stable one (e.g.[]), there are reports that in some cases the [110] pair is the most stable one. T. Bredow [] assumed that the [110] pair becomes more stable when the cubic phase is not fully stabilized, which is consistent with the here used pure zirconia system. This shows, that the formation of vacancy pairs as described in literature is reproduced in the pure zirconia system and the missing of this clustering effect is due to the specific configuration, and not due to numerics.

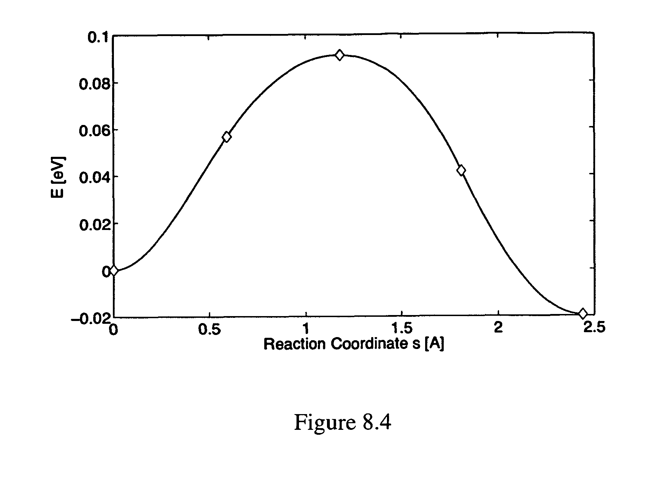

Using again the $4 \times 4 \times 4$ cell with only two vacancies, the migration barrier is computed. Since vacancy pairs closer than the [120] are unstable, the next vacancy is either on the [120] position, or one site farer away. In Fig. 8.4 the MEP between these two positions is shown. Due to the second vacancy, the jump is not symmetric. Both the forward and the backward jump have a barrier of about $\Delta E \approx 0.1eV$. This is by a factor of three smaller than the equilibrium volume jump in pure zirconia, and a factor six smaller than the literature values corresponding to a randomly displaced oxygen sub-lattice[52]. In fact, this tetragonally displacement of the oxygen sub-lattice has also been observed in the layered structure, which is reasonable considering the large lattice constant. Thus, the barrier of 0.1eV actually has to be compared to the values of 0.6eV. However, this barrier is determined in an idealized case, where only two vacancies are present in the system and are sufficiently far away from each other. It will become clear that the correlation of the vacancies is the main effect determining the activation energy of the diffusion process. Hence, the potential surface in the 16 vacancy case is highly complicated and cannot fully be grasped by determining migration barriers alone, but the dynamics in the whole system needs to be accounted for.

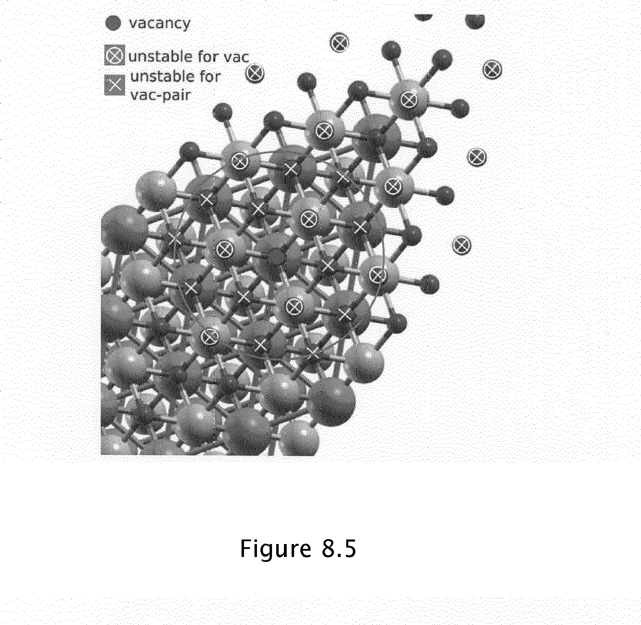

To investigate this long range interaction further, the configurational energy of different pairs is determined in the two vacancy system. From these computations the general trend, that larger vacancy separations lead to smaller energies even over a large distance can be seen. However, this is no monotonous function of the vacancy separation since there is also a dependence on the crystallographic direction of the vacancy-vacancy pair. Separations smaller than 4.58Å are not stable (cf. Fig. 8.5), because the energy difference to the next farer site is larger than the small barrier of $0.1eV$ in between.

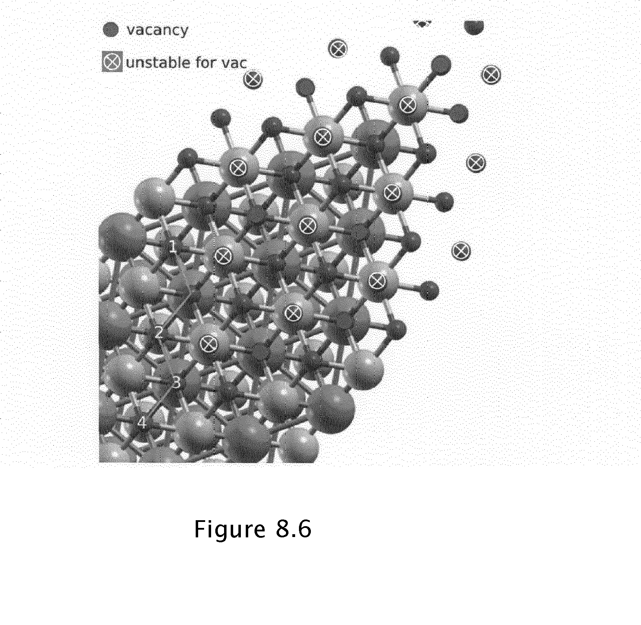

As has been pointed out before, the activation energy of the diffusion process in the zirconium layers is not at all determined by the low barrier between neighboring oxygen sites. The 16 vacancies are located on the 64 $Zr_3$ / $Y_1$ lattice sites. Consequently, every fourth oxygen site is occupied by a vacancy, which leads to an average vacancy-vacancy distance of 7.5Å. To get an idea how the barriers in the system with all vacancies look like, the 16 vacancies have randomly been distributed throughout the two zirconium layers of the $4 \times 4 \times 4$ supercell. Except for only choosing $Zr_3$ / $Y_1$ sites no further rules have been applied in the distribution. After setting up the cell, the system has been relaxed to the next local minimum. Subsequently, the energy along the motion of one vacancy over five lattice sites has been computed with the NEB method. The vacancy distribution and the pathway of the moving vacancy are shown in Fig. 8.6. First, one can see that in this calculations vacancies can keep closer than the $4.58Å$ observed before. In fact, further vacancies can stabilize vacancy pairs being even first nearest neighbor. It has to be pointed out that this is a special case and the computations do not give any statement how stable this configuration is, and how likely, if at all, it is for this configuration to arise in a dynamical system.

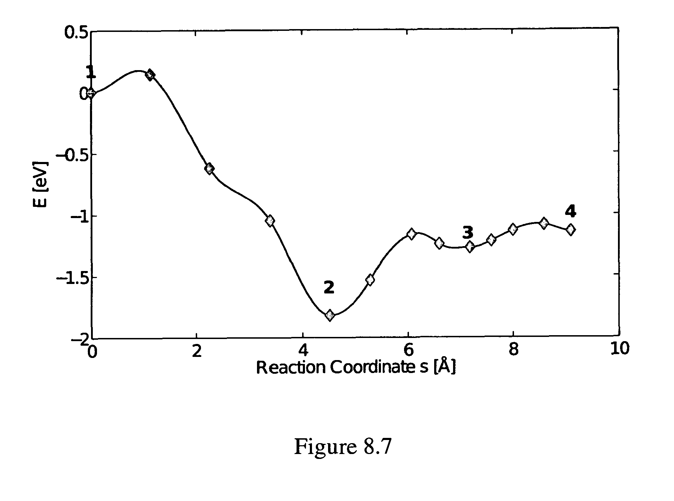

The potential surface experienced by the moving vacancy is shown in Fig. 8.7. The maximal barrier is $1.9eV$, which is much higher than the barrier resulting from the lattice ($\Delta E_{lat} \approx 0.1eV$). This high barrier can surely be avoided by moving different pathways, but due to the high concentration of vacancies, it is unlikely to find one without any such high barriers for a given vacancy distribution. Between layers, there is also a correlation between the vacancies. But due to the large distance and the shielding by the yttrium layer, they are much less relevant than the ones in plane. A [111] vacancy pair through the layer is over $0.5eV$ higher in energy than at farer distance, but is still metastable. These correlations are punctual, meaning that they completely vanish in the layer under consideration, when the invoking vacancy makes a jump away.

Although this looks that we jumped out of the frying pan and into the fire when introducing this system, there is one consideration that could safe the day: These high barriers do not result from vacancy pair bonds, but from vacancy repulsion. This means that as soon as the vacancy inducing such correlation effects moves away, the barrier in this direction will drop. In case of a concentration gradient, the barriers are lower when following the gradient than moving against it. The high concentration of fuel at the anode of the SOFC extracts the oxygen from the electrolyte surface with a high rate introducing vacancies to the lattice. As the model simulations in the last section of this chapter will show, the combination of the concentration gradient and the repelling character of the vacancies leads to an ionic movement faster than that of a simple diffusion process in e.g. 8YSZ.

Before moving to the MD calculations a last point needs to be mentioned: As has been seen in Fig. 8.6 it is possible for vacancies to take nearby sites for a short time, if another driving force is present. This could be caused by other nearby vacancies, which have to move away before the two vacancies under consideration can depart, or the extraction of oxygen ions by the fuel at the anode of the SOFC. It is not clear, whether the extraction of oxygen by the fuel is a strong enough driving force to impose such unfavorable configurations to the electrolyte, but if such situations occur at one side of the electrolyte, the vacancies will literally be pushed into the electrolyte leading to an enhanced motion, at least in a layer near to the anode. On the cathode side of the electrolyte, the vacancies are destroyed by incorporation of oxygen. This process has a slower kinetics than the extraction of oxygen at the anode. However, a high concentration of vacancies at this side will also augment the kinetics.

**8.4. Molecular Dynamics**

As mentioned before, the correlation effects in the layered structure due to the high number of vacancies lead to a complexity, which cannot be fathomed by straight forward inspection of the pair interactions as it has been done in chapter 7. If the interactions between the vacancies would be purely electrostatic, such an approach would be feasible, but the relaxation of the lattice around a vacancy contribute not insignificantly to this interaction. The energy change resulting from the adaption of the lattice for two nearby vacancies cannot easily be determined from the relaxation pattern of separated vacancies. Alternatively, it is possible to compute the system with all changes and interactions as a whole by doing Molecular Dynamics (MD). Classical pair-potentials as the Buckingham potential are often used for this purpose. They are computationally inexpensive but the results are doubtful, especially in such complex systems. To determine the diffusion in the layered structure on basis of a very accurate description of interactions, ab-initio molecular dynamics as implemented in VASP are employed. From the computational demand of this framework follows a rather limited size of the calculations both in spatial and temporal extent. Thus, this approach clearly has the caveat, that the statistics are not as good as in classical MD. This is especially the case at low temperatures, when the dynamics is low and the number of jumps taken place is little. Nevertheless, it is better to determine an accurate activation energy with larger error bars, than a wrong activation energy with small error bars.

The MD computations are executed in the $4 \times 4 \times 4$ supercell of the layered structure including plane waves up to an energy cut off of 300eV and sampling the Brillouine zone using only the gamma point. For the description of the thermodynamics a microcanonical ensemble is considered. In this way the temperature is not controlled by a thermostat and is therefore fluctuating strongly throughout the MD run. At the beginning of a MD run VASP assigns gaussian distributed velocities to the ions in such a way, that the initial temperature corresponds to a given starting value. In this procedure, it is not meaningful to allocate a mean temperature and mean squared displacement (MSD) for one run. Therefore, each time step, with its own temperature value of all MD runs with different starting temperatures is plotted together with the corresponding MSD of the oxygen ions. The Einstein relation (Eq. 4.30) can be rewritten as

$$\langle r^2 \rangle(t) = D_0 \cdot t \cdot 2 \cdot d \cdot e^{-E_A/k_B T} , \qquad (8.2)$$

with the time $t$, the dimensionality of the diffusion process $d$, the activation energy $E_A$ and the diffusivity at infinite temperature $D_0$. Since the diffusion process only takes place in plane, the MSD should also refer to the movement in two dimensions. The ions are zig-zagging through the zirconium layer. This motion has components in all three spatial dimensions, although the deviation into the directions of the stacking con only assume two values due to the zig-zagging. Therefore, the projection of this movement into the layer-plane is used for the determination of the two dimensional MSD. With $d = 2$ Eq. 8.2 can be written as

$$\ln\left(\frac{1}{4}\langle r^2 \rangle(t)\right) - \ln(t) = \ln(D_0) - \frac{E_A}{k_B T} . \qquad (8.3)$$

Plotting the left side of the equation, which is the logarithm of the instantaneous diffusivity ln(D) from the MD run, over the inverse temperature results in a Arrhenius plot of all data points. Linearly fitting the cloud of data points in this plot corresponds to executing the time-averaging of the left side of the equation (time averaging of ln(D)) and of the inverse temperature

$$\left\langle \ln\left(\frac{1}{4}\langle r^2 \rangle(t)\right) - \ln(t) \right\rangle = \ln(D_0) - \frac{E_A}{k_B}\left\langle \frac{1}{T} \right\rangle . \qquad (8.4)$$

This yields the activation energy of the oxygen ion diffusion in the layered structure $E_A$ and the maximum diffusivity $D_0$, which together determine $D$ at all temperatures.

**8.4.1. Computational Results**

First a specific configuration is set up, in which all 16 vacancies are located in one half of the cell distributed over both zirconium layers. The vacancies are that closely packed in this configuration, that they directly repel each other and strive for an homogeneous distribution in the zirconium layers. This extreme concentration gradient gives some idea, how strongly the vacancies push each other when a concentration gradient is present in the electrolyte, which is always the case in a operating SOFC. Due to the periodic boundary conditions, the vacancies can move in both directions to equilibrate the distribution. In fact, after only 1.1 ps the concentration gradient vanished and the vacancies assumed stable distances to each other. In this MD run, it was again very well visible that the yttrium near positions are mostly avoided by the vacancies. However, in some cases, vacancies moved over into the yttrium layer, when the repulsion of other vacancies nearby made it energetically possible. These yttrium near vacancies only have a short life-time and move back into the zirconium layer once other nearby vacancies moved away. This MD run was executed over a total of 10 picoseconds to bring the system to a state near the thermodynamic equilibrium.

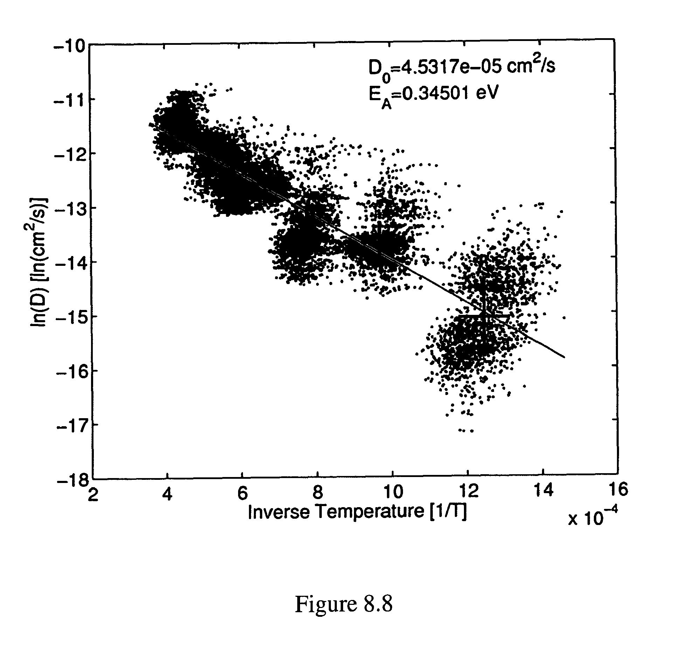

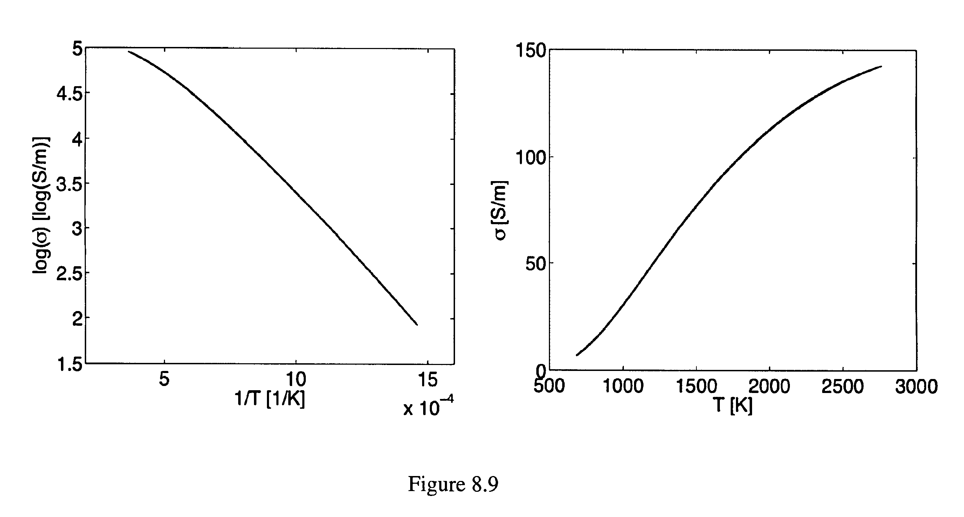

This end state (after local relaxation of the ionic positions) is then used as a starting configuration for a series of MD runs with different starting temperatures to determine the diffusivity, the activation energy and the conductivity of the layered structure. Statistical data is collected over 10 picoseconds for each starting temperature. $E_A$ and $D_o$ are subsequently obtained by Eq. 8.4. To check, whether the sampling-time is long enough, one MD run has been executed for 20 ps leading to no change of the diffusivity determined at the temperature of the considered MD run. Since no concentration gradient is present in the simulation and the vacancies hinder each others motion, it is expected that the diffusivity is low and the activation energy is high. In Fig. 8.8 the MD results are plotted as shown in Eq. 8.4. The migration barrier is with $E_A$ = 0.34$eV$ higher than the migration barrier determined without vacancy interactions $\Delta E$ = 0.1$eV$, but much lower, than the high barriers seen in Fig. 8.7 of about $\Delta E \approx 1.9eV$. In fact, obtaining an activation energy of about 0.3$eV$ is a very good result, showing, how the intelligent positioning of cations in the system leads to a reduction in activation energy. In experiments the value for 8YSZ is typically about 0.8$eV$ to 1$eV$ []. The absolute value of the diffusivity is, at a temperature of $T$ = 800$K$, about two orders of magnitude higher than the experimental results of 10YSZ from Kilo et al. [], while their activation energy was $E_A$ = 0.99$eV$. In simulations, the obtained migration barriers are typically lower than the experimental ones. Devanathan et al. gave a summary of some numerically determined migration barriers in 8YSZ from different sources, lying between 0.2$eV$ and 1$eV$. The lowest reported value was from Li and Hafsjold [], who used classical pair potentials to determine their barrier and obtained very different results for different sets of interaction parameters. Typical values of more reliable sources are about 0.6$eV$. In Fig. 8.9 the conductivity is determined from the diffusivities using Eq. 4.33. Ivers-Tiffee et al. [] give a comparison of experimental conductivities of different solid state electrolytes, in which LSGM is the one with highest conductivity of $\sigma_{LSGM}$ ($T$ = 800°C) =18$S$ / m, while YSZ has a conductivity of $\sigma_{YSZ}$ ($T$ = 800°C) = 2$S$ / m. Stephen J. Skinner and John A. Kilner [], give similar data, except that in their publication LSGM has a lower conductivity than CGO. V. Thangadurai and W. Weppner [] as well as Krok et al. [] give comparable results. The layered structure have a two-dimensional conductivity of $\sigma_{layer}$($T$ = 800°C) = 42$S$ / m being even higher than the LSGM conductivity. This is even more remarkable, when considering that only half of the oxygen ions, those in the zirconium layer, take place in the diffusion process, the MSD, however is accordingly averaged over all oxygen ions in the system.

This shows that the diffusivity as well as conductivity of the layered structure is much higher than 8YSZ and LSGM. Even though this structure was specially designed to have such high conductivities, it was still surprising to obtain such high performances considering the vacancy-vacancy interactions. Moreover, the next chapter will show model simulations concluding that the vacancy repulsion actually gives rise to ionic currents being higher than that in the case of non repulsing particles, when a concentration gradient is present in the electrolyte layer.

## 8.5. Model Simulations

In the previous section, the DFT MD calculations determined the mobility of the oxygen ions in the layered structure, accounting for all changes of the potential due to electrostatic and elastic changes in the lattice, as well as the quantum effects of the electrons. However, to understand better why the diffusivity is that much higher than the one in 8YSZ, although the vacancy interaction give rise to high barriers in the system, simulations are conducted which focus on the movement of the ions due to a concentration difference and the repulsion of the particles (vacancies). In section 8.3 it was shown, that the vacancies in 8YSZ do not repel each other, at least the lattice sites near a vacancy are metastable for a second one. Also it was shown, that vacancies in the layered structure repel each other over a distance of two lattice sites. This has to be taken into account explicitly in this simulations. One could assume that the repelling character of the vacancies in the layered structure leads to a serious reduction of the mobility, since they hinder each others movement. This simulation's main purpose is to evaluate this effect and provide some understanding of the difference in the diffusion processes in 8YSZ and the layered structure. To gain a qualitative understanding, is suffices to include the main repelling interactions in the system and even out the rest of the interactions. Therefore, the whole repelling circle determined in Fig. 8.5 is taken as an absolute exclusion for other particles but all other interactions are neglected. In addition, for comparison reasons, also the case that only nearest neighbor repel each other.

### 8.5.1. Simulation procedure

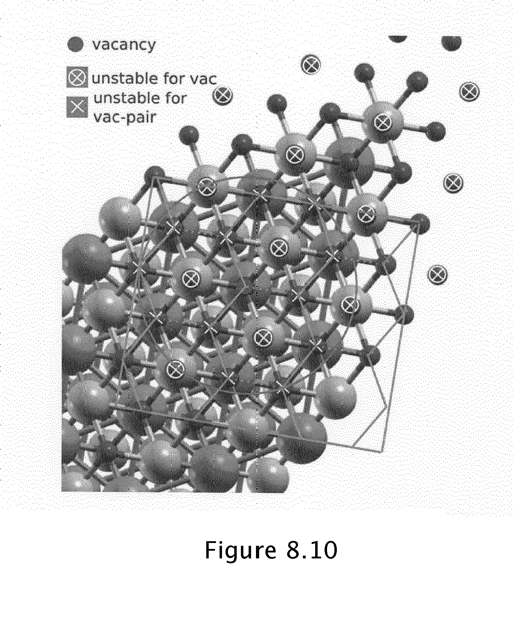

For the simulation a two dimensional hexagon grid is assumed (c.f. Fig. 8.10), where the lattice sites lie on the corners of the hexagons. The particle (vacancies) can jump from any lattice site into three different directions $k = 1,2,3$. In this model approach, all jumps have the same transition rate $\Gamma_k$, which multiplied by a small time step $\delta t$ yields the probability that the particle passed the transition state k in the time interval $\delta t$ :

$$w_k = \delta t \cdot \Gamma_k \qquad (8.5)$$

As long as $\delta t$ is chosen small, the probability to stay at the given site $w_{stay} = 1 - \sum_{k=1}^{3} w_k$ is much larger than the probability to execute any of the possible jumps. Basically, in one time-step all $N$ particles is the grid can jump with the probability $\sum_{k=1}^{3} w_k$, which is equivalent that $N \cdot \sum_{k=1}^{3} w_k$ particles actually execute a jump. Consequently on jump process took the time

$$\delta t' = \frac{\delta t}{N \cdot \sum_{k=1}^{3} w_k} = \frac{1}{N \cdot \sum_{k=1}^{3} \Gamma_k} \qquad (8.6)$$

To simulate the movement of vacancies in 8YSZ and in the layered structure, the particles in one case just block the lattice site occupied by themselves, and in the other case block a specific number of lattice sites around their position. In 8YSZ the first nearest neighbor distance for two vacancies is energetically less stable than more larger distances, but all configurations of vacancies are at least metastable. Thus, neglecting the differences in configurational energies, it is reasonable to assume a blockage of the radius $R = 1$ (i.e. just the lattice site itself) for the movement in YSZ and $R = 3$ in the layered structure (c.f. Fig. 8.10). And, as mentioned before, the $R = 2$ will be computed to better see the difference between $R = 1$ and $R > 1$.

Technically this means that after a particle has been chosen for jumping and its direction chosen as well, it can only execute the jump if the ending lattice site is actually non-blocked. In this two dimensional grid of the size $N_i \times N_j$, the $i = 1$ plane of the lattice is the inlet boundary and the $i = N_i$ plane is the outlet boundary. Both the inclusion rate and the extraction rate are set to 1 in this simulation, which means, as soon as there is a non-blocked site in the $i = 1$ plane a particle will enter the system on this site, and as soon as a particle enters the $i = N_i$ plane, it will be extracted from the grid. The other two boundaries of the grid are connected by periodic boundary conditions. The steps of the simulation algorithm are:

1. Setting up an empty or partially filled (to the maximal allowed concentration $c_{max}$) lattice of the size $N_i \times N_j$
2. Set particle to the $i = 1$ sites starting from $j = 1$ if not blocked, and as long as the maximal concentration $c_{max}$ is not reached.
3. Remove any particles in the plane $i = N_i$ and increase the output counter $N_{out}$ by the number of removed particles
4. Choose one particle from the system following an uniform distribution
5. Determine in which of the three directions to jump by another random number
6. Check whether the final site is blocked and if not move particle there
7. Increase the time counter $t + \delta t'$, where the $N$ in Eq. 8.6 denotes the number of particles present at this specific step
8. If maximal number of steps is reached, calculate the particle current by $j = N_{out} / t$, otherwise go back to 2.

### 8.5.2. Results

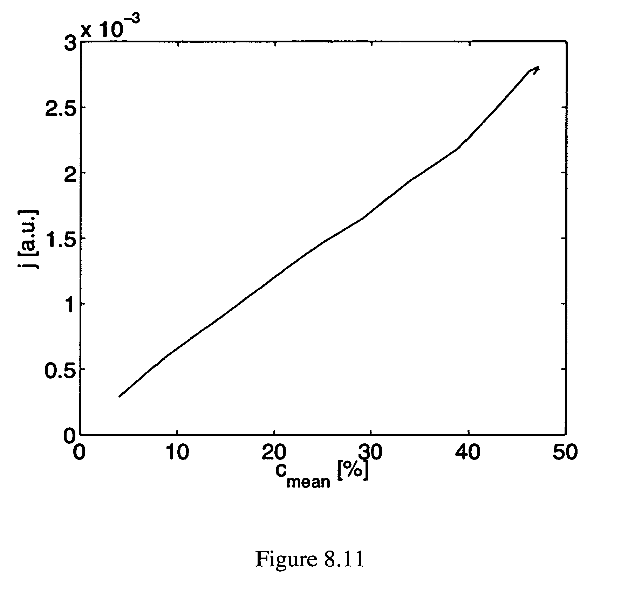

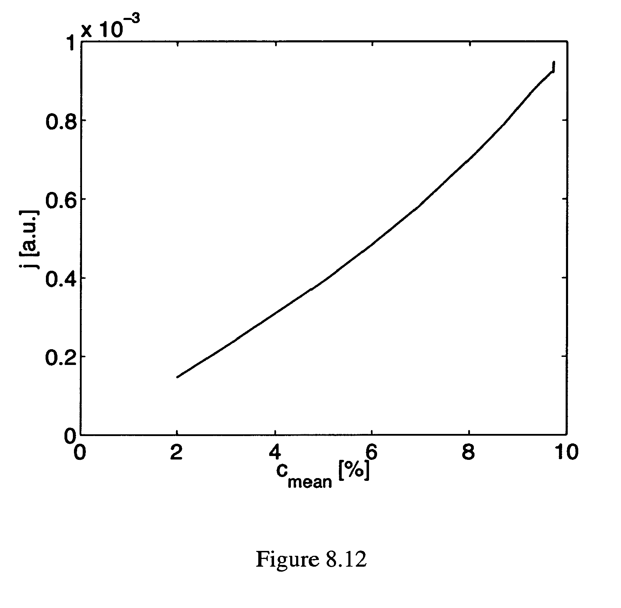

In Fig. 8.11 the results for R = 1 are shown. In (a) the resulting current is plotted against the concentration limit in the simulation. Up to about $c_{max} = 45\%$ the current increases linearly, then the current does not increase any further. In Fig. 8.11(b) the current is plotted against the actually particle concentration in the grid showing a maximum at $c_{mean} = 47\%$ of $j_{max} = 2.8 \cdot 10^{-3}$. This shows, that the particle concentration in the given system does not exceed half of the particle concentration actually fitting in the lattice (with $R = 1$ it is allowed that every lattice site is taken by a particle). In Fig. 8.12 a repulsion radius of $R = 2$ is assumed. The concentration reaches 21.3% and the maximal current is $j = 1.4 \cdot 10^{-3}$. If $R = 3$ (cf. Fig. 8.13), the maximal current $j_{max} = 0.9 \cdot 10^{-3}$ is already reached at $c_{mean} = 9.7\%$ (half of the maximally in the lattice fitting particles). The maximal current is only one third of the one in the $R = 1$ case, since the concentration in $R = 1$ reaches a five-fold value.

However, it can be seen in the direct comparison (Fig. 8.14) that at a given particle concentration the current is higher in the $R = 3$ case. Furthermore, for $R = 1$ the concentration increases linearly, while it increases super-linear in the $R > 1$ cases.

To compare the 8YSZ case with the layered case, specific concentrations are relevant. In 8YSZ the vacancy concentration only reaches $c = 4\%$, while in the layered structure the overall concentration is $c = 12.5\%$, and effectively in the zirconium layer $c = 25\%$. The performance comparison in this model is then $j_{layer}$ ($c = 25\%$) / $j_{8YSZ}$ ($c = 4\%$). Since the concentration only reaches 9.8% in the $R = 3$ simulations, this value is taken for comparison.

With $j_{layer}$ ($c = 9.8\%$) = $0.9 \cdot 10^{-3}$ and $j_{8YSZ}$ ($c = 4\%$) = $2.8 \cdot 10^{-4}$ follows, that the current in this approximation is in the layered structure by a factor of 3.3 higher than in 8YSZ.

The maximally in the simulation reached concentrations are independent of the initial configuration. Either starting from a full or empty lattice, will settle down to this value (or however $c_{max}$ is chosen). These equilibrium concentrations are given by the boundary conditions at the inlet and outlet. Having an instantaneous removal of particles at $i = N_i$ leads to the observed concentrations. Lower removal rates will increase the equilibrium concentration, lower inclusion rates will decrease it further. When the extraction rate is reduced, e.g in a way that the probability for each particle at the extraction layer to leave in each time step $\delta t$ is $w_{extract}$ = 0.01%, then is the concentration reaches 85% of the number of particles fitting into the layer, which is 100% for $R = 1$, 50% for $R = 2$ and 20% for $R = 3$. This shows how the current changes at larger particle concentration very well. Comparing the currents in this case between 8YSZ ($c = 4\%$) and layer ($c = 17\%$), then one obtains a current being 55 times higher in the layered structure than in 8YSZ. Thus increasing the concentration in R = 3 by not even a factor of 2 increases $j_{layer}$ / $j_{8YSZ}$ by a factor of over 16.

This model-simulations show that the repulsion of particles actually has an increasing effect on the particle currents at a given vacancy concentration. On the one hand, the maximal concentration of particles fitting into the system is reduced when the particles repel each other, on the other hand the particle current increases exponentially in this case. Consequently, if there is no limit to the concentration, the highest current is obtained in the $R = 1$ case, but when systems of equal concentration are compared, the one with the highest repulsion range $R$ will outperform the others. This effect is obviously very small at low concentration, since in highly diluted systems the particles have less interactions when moving through the system. But, when the concentration rises up, especially if it approaches the maximal number of particles fitting into the lattice, the particles have a much higher rate to move to areas of low concentration at $R > 1$ than for $R = 1$. This is because at $R > 1$ a higher number of lattice sites are blocked in areas of higher concentration than at $R = 1$, making the movement to the outlet much more possible. This directional preference also exists at high concentrations in the R = 1 system, but for $R > 1$ it starts affecting the motion of particles already at much more dilute systems.

The assumption of equal transition rates in one system neglects the difference in configurational energies, and assumes one averaged migration barrier. This is an approximation reducing the current in the layered structure further in comparison to 8YSZ. Stronger repulsion of vacancies, without actual exclusion of lattice sites, is present in both systems, thus making approximately the same error. However, in 8YSZ vacancy pairs form, reducing the mobility of particles. This is neglected here. More serious is the assumption of equal $\Gamma_k$ in both systems, which is obviously not true at all. The activation energy of the layered structure is $E_A = 0.34 eV$, while it is between $0.6 eV$ and $1 eV$ (difference between experiments and calculations). This shows even more how the repulsion effect actually increases the performance and does not reduce it as assumed.

## 8.6. Conclusions

In this chapter, a new intelligent configuration of YSZ has been proposed harnessing the strain dependent barrier, the avoidance of yttrium induced high barriers along the pathway, the reduction of the relevant migration barrier by neighboring yttrium dopants and the diffusion mechanism of repelling species. In this way an increased diffusivity and conductivity of the compound has been achieved in two dimensions, while the ionic mobility in the third dimension has been sacrificed. The activation energy of this diffusion process is only $E_A = 0.34 eV$ leading to a conductivity at $T = 800°C$ of $\sigma_{layer}$ = $42 S / m$, which is more than double the one of LSGM. Due to the low barrier the conductivity at lower temperatures is in comparison to other electrolytes even higher than this. At 500°C the conductivity of 8YSZ is only $\sigma_{YSZ}$ = $0.11 S / m$, $\sigma_{LSGM}$ = $0.9 S / m$ for LSGM and the layered structure exhibits a conductivity of $\sigma_{layer}$ =$13 S / m$. This advantage has to be bought with exchanging the simple and fast synthesizing methods like Sol-Gel and sintering with more complicated synthesizing methods as molecular beam epitaxy. It might be advantageous to reduce the number of vacancies to obtain less repulsion and thus have a smaller activation energy. However, reducing the number of charge carriers has a contrary effect and whether a reduction of vacancies increases or decreases the performance cannot be answered without further investigations. In such case, the yttrium content in the system can be reduced, to decrease the number of vacancies by e.g. using the layered structure of $Zr_2Y_4O_{11}$ found by Predith et al., which has an overall vacancy concentration of 9%.

**Claims**

1. An electrolyte material, comprising an electronically insulating oxide of a base metal and at least one additional metal or oxide of an additional metal, where the additional metal or oxide of the additional metal enhances the base metal with ionic conductivity, **characterised in that**
   the electrolyte material has a layer structure with
   ● B-layers in which at least 30 %, preferably at least 70 % and most preferably at least 90 % of the metal atoms and/or metal ions are atoms and/or ions of the base metal and
   ● A-layers in which at least 30 %, preferably at least 70 % and most preferably at least 90 % of the metal atoms and/or metal ions are atoms and/or ions of the additional metal.

2. An electrolyte material according to claim 1, **characterized in that** the base metal is chosen from the group of Zr, Al, Ce, Mg and Bi.

3. An electrolyte material according to any one of claims 1 to 2, **characterized in that** the additional metal is chosen from the group of Y, Sc, Gd, La, Sr and V.

4. An electrolyte material according to any one of claims 1 to 3, **characterized in that** the base metal is Zr and the additional metal is Y.

5. An electrolyte material according to any one of claims 1 to 4, **characterized in that** it comprises an alternating structure (ABABAB...) of A- and B-layers.

6. An electrolyte material according to any one of claims 1 to 5, **characterized in that** it has a fluorite crystal structure.

7. An electrolyte material according to any one of claims 1 to 6, **characterized in that** each of the A-layers and B-layers is no thicker than 10 nm, preferably no thicker than 5 nm and most preferably comprises 1 or 2 monolayers of atoms and/or ions.

8. An electrolyte material according to any one of claims 1 to 7, **characterized in that** the atoms and/or ions of the additional metal are larger than the atoms and/or ions of the base metal.

9. A method to produce an electrolyte for a fuel cell comprising the electrolyte material according to any one of claims 1 to 8, comprising the steps of:

   ● growing the layer structure of the electrolyte material as a film on a substrate;
   ● cutting at least one section from the film; and
   ● contacting the cut face of the section with a face through which the ionic current between the cathode and the anode of the fuel cell is to flow, so that said ionic current flows along the B-planes of the electrolyte material.

10. A method to produce an electrolyte for a fuel cell comprising the electrolyte material according to any one of claims 1 to 8, comprising the steps of:

    ● arranging a substrate in an angle of between 70 and 110, preferably between 80 and 100 and most preferably in a right angle, with a face through which the ionic current between the cathode and the anode of the fuel cell is to flow;
    ● growing the layer structure of the electrolyte material as a film on the substrate.

Figure 8.1

Figure 8.2

Figure 8.3

Figure 8.4

Figure 8.5

Figure 8.6

Figure 8.7

Figure 8.8

Figure 8.9

Figure 8.10

Figure 8.11

Figure 8.12

Figure 8.13

Figure 8.14

Europäisches
Patentamt
European
Patent Office
Office européen
des brevets

**EUROPEAN SEARCH REPORT**

Application Number

EP 12 40 0023

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GARCIA-BARRIOCANAL J ET AL: "Colossal Ionic Conductivity at Interfaces of Epitaxial ZrO2:Y2O3/SrTiO3 Heterostructures", SCIENCE, AMERICAN ASSOCIATION FOR THE ADVANCEMENT OF SCIENCE, WASHINGTON, DC; US, vol. 321, 1 August 2008 (2008-08-01), pages 676-680, XP007913642, ISSN: 0036-8075, DOI: 10.1126/SCIENCE.1156393 * the whole document * | 1-10 | INV. H01M8/12 |
| X | RADHAKRISHNAN A N ET AL: "Order-disorder phase transformations in quaternary pyrochlore oxide system: Investigated by X-ray diffraction, transmission electron microscopy and Raman spectroscopic techniques", JOURNAL OF SOLID STATE CHEMISTRY, ORLANDO, FL, US, vol. 182, no. 8, 1 August 2009 (2009-08-01), pages 2312-2318, XP026438048, ISSN: 0022-4596 [retrieved on 2009-06-16] * page 2313 - page 2314 * | 1,3,6 | |
| | | | **TECHNICAL FIELDS SEARCHED (IPC)** |
| | | | H01M |

The present search report has been drawn up for all claims

| Place of search | Date of completion of the search | Examiner |
|---|---|---|
| The Hague | 7 December 2012 | Chmela, Emil |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)